# EUROPÄISCHE PATENTSCHRIFT

(11) **EP 2 692 554 B1**
(45) Veröffentlichungstag und Bekanntmachung des Hinweises auf die Patenterteilung: **09.03.2016**
(21) Anmeldenummer: 13400016.5
(22) Anmeldetag: 24.07.2013
(51) Int. Cl.: B60D 1/52, B60D 1/54

(54) **Anhängekupplung mit einer Verriegelungseinrichtung**
Tow bar coupling with a locking device
Attelage doté d'un dispositif de verrouillage

(30) Priorität: 03.08.2012 DE 102012015497
(43) Veröffentlichungstag der Anmeldung: 05.02.2014
(73) Patentinhaber: WESTFALIA - Automotive GmbH, 33378 Rheda-Wiedenbrück (DE)
(72) Erfinder: Weiner, Marc, D-33332 Gütersloh (DE)
(74) Vertreter: Patentanwälte Bregenzer und Reule Partnerschaftsgesellschaft mbB

(56) Entgegenhaltungen:
- EP-A1- 2 412 550
- EP-B1- 1 533 149
- DE-A1-102005 039 076
- DE-A1-102009 045 275

## Beschreibung

Die Erfindung betrifft eine Anhängekupplung, mit einem an einem Kraftfahrzeug, insbesondere einem Personen-Kraftfahrzeug, befestigbaren oder befestigten Halter zum Halten eines zum Anhängen eines Anhängers vorgesehenen Kupplungsarms, und mit einer Verriegelungseinrichtung zur Verriegelung des Kupplungsarms an dem Halter, wobei die Verriegelungseinrichtung eine Formschlusselementanordnung mit mindestens einem Formschlusselement umfasst, die in einer Verriegelungsstellung zur Verriegelung des Kupplungsarms am Halter mit einer Formschlusskontur in einem Formschlusseingriff ist und einer Entriegelungsstellung außer Eingriff ist, so dass der Kupplungsarm relativ zu dem Halter beweglich ist, wobei die Verriegelungseinrichtung einen in einer Führung beweglich gelagerten Stellkörper zum Verstellen der Formschlusselementanordnung aufweist, der eine Betätigungsfläche aufweist, welche die Formschlusselementanordnung bei einer Verstellung des Stellkörpers in einer Verriegelungsstellrichtung in die Verriegelungsstellung betätigt.

Bei dem Stellkörper handelt es sich beispielsweise um einen so genannten Sperrbolzen, der eine schräge Betätigungsfläche, insbesondere eine konische Betätigungsfläche, aufweist. Der Sperrbolzen ist in der Regel linear in der Führung gelagert, was zum Beispiel in der gattungsgemäßen EP 1533149 B1 beschrieben ist oder auch bei sogenannten Steck-Anhängekupplungen üblich ist. Der Sperrbolzen betätigt eines oder mehrere Formschlusselemente, in der Regel Kugeln, Bolzen oder dergleichen, nach radial außen, um so den Kupplungsarm am fahrzeugseitig fest angeordneten Halter zu verriegeln, insbesondere auch zu verspannen. Die Betätigungsfläche ist bezüglich der Verriegelungsstellrichtung ausreichend lang, so dass bei Verschleiß der Betätigungsfläche, beispielsweise durch die Belastungen beim Fahrbetrieb des Kraftfahrzeugs, nach und nach weitere Abschnitte der Betätigungsfläche auf die Formschlusselementanordnung, zum Beispiel Kugeln, wirken. Der Stellweg des Stellkörpers wird also bei Verschleiß der Betätigungsfläche länger. Die übliche konstruktive Auslegung ermöglicht es, dass über die gesamte Lebensdauer der Anhängekupplung nach und nach in Bezug auf die Verriegelungsstellrichtung immer wieder neue Bereiche der Betätigungsfläche genutzt werden und die verschlissenen Bereiche quasi außen vor bleiben. Man kann jedoch die Betätigungsfläche und den Stellweg des Stellkörpers nicht unendlich lang ausgestalten.

Es ist daher die Aufgabe der vorliegenden Erfindung, eine Anhängekupplung mit einer Verriegelungseinrichtung bereitzustellen, die eine verbesserte Verschleißkompensation aufweist.

Zur Lösung der Aufgabe ist bei einer Anhängekupplung der eingangs genannten Art vorgesehen, dass sie zur Kompensation eines Verschleißes der Betätigungsfläche eine Verschleißkompensationseinrichtung aufweist, die ein Stellmittel zum Verstellen des Stellkörpers in einer Kompensationsstellrichtung quer zu der Verriegelungsstellrichtung umfasst, so dass anstelle eines verschlissenen Bereiches der Betätigungsfläche ein unverschlissener Bereich der Betätigungsfläche auf die Formschlusselementanordnung wirkt.

In anderen Worten kann also zur Kompensation eines Verschleißes der Betätigungsfläche eine Verschleißkompensationseinrichtung vorgesehen sein, die ein Stellmittel zum Verstellen des Stellkörpers entlang einer Kompensationsstellbahn umfasst, die quer zu der Verriegelungsstellrichtung verläuft, so dass anstelle eines verschlissenen Bereiches der Betätigungsfläche ein unverschlissener Bereich der Betätigungsfläche auf die Formschlusselementanordnung wirkt.

Der unverschlissene Bereich der Betätigungsfläche, der dann auf die Formschlusselementanordnung wirkt, ist durch die Verstellung in die Kompensationsstellrichtung oder entlang der Kompensationsstellbahn erreichbar, zweckmäßigerweise ausschließlich durch diese Verstellung in die Kompensationsstellrichtung oder entlang der Kompensationsstellbahn. Durch eine Verstellung in die Verriegelungsstellrichtung wäre der unverschlissene Bereich der Betätigungsfläche zweckmäßigerweise sonst nicht oder allenfalls zufällig erreichbar.

Z.B. kann vorgesehen sein, dass bei einem ersten Verstellen des Stellkörpers in die Verriegelungsstellung ein erster Bereich und bei einem zweiten Verstellen des Stellkörpers in die Verriegelungsstellung ein zweiter Bereich der Betätigungsfläche die Formschlusselementanordnung betätigt.

Es ist auch möglich, dass bei einem aufeinanderfolgenden Verstellen des Stellkörpers in die Verriegelungsstellung oder bei in der Verriegelungsstellung befindlichem Stellkörper voneinander verschiedene Bereiche der Betätigungsfläche auf die Formschlusselementanordnung wirken.

Am Kupplungsarm ist in an sich bekannter Weise ein Kuppelkörper zum Anhängen eines Anhängers, zum Beispiel eine Kupplungskugel oder ein sonstiges Formstück, vorgesehen.

Unter einem Kupplungsarm soll jedoch nicht nur der Arm oder eine Stange als solche verstanden werden, sondern auch beispielsweise ein mit dem Kupplungsarm verbundener Befestigungsabschnitt oder Lagerabschnitt zur Befestigung bzw. zum Lagern am fahrzeugseitigen Halter.

Es ist ein Grundgedanke der vorliegenden Erfindung, dass der Stellkörper der Verriegelungseinrichtung nicht nur in seiner an sich üblichen Verriegelungsstellrichtung betätigt wird, sondern auch quer dazu, beispielsweise durch eine Drehung, in einer Kompensationsstellrichtung. Die Verriegelungseinrichtung nutzt also quasi nicht nur den Stellweg, der durch das Verstellen des Stellkörpers in der Verriegelungsstellung möglich ist, sondern betätigt anhand der Stellmittel den Stellkörper auch so, dass Bereiche der Betätigungsfläche in Eingriff bzw. Stellkontakt mit der Formschlusselementanordnung gelangen, die bei einer ausschließlichen Betätigung des Stellkörpers in Verriegelungsstellrichtung und/oder entgegen der Verriegelungsstellrichtung nicht genutzt werden würden.

Der in der Formulierung des Anspruches 1 als verschlissener Bereich der Betätigungsfläche bezeichnete Bereich muss nicht so verschlissen sein, dass er nicht wieder genutzt werden kann. In anderen Worten kann die Verriegelungseinrichtung auch dafür sorgen, dass die Betätigungsfläche des Stellkörpers mehr oder minder gleichmäßig verschleißt, so dass stets ein zuverlässig verriegelnder Bereich der Betätigungsfläche zum Betätigen der Formschlusselementanordnung zur Verfügung steht.

Die Formschlusselementanordnung umfasst eines oder mehrere Formschlusselemente, zum Beispiel Kugeln, Rollen, Bolzenelemente oder dergleichen. Es versteht sich, das eine einzige Kugel oder Rolle ausreicht. Es ist aber auch möglich, dass die Formschlusselementanordnung einen mit dem Stellkörper zusammenwirkenden Betätigungskörper, zum Beispiel eine Kugel oder eine Rolle, und einen Formschlusskörper, zum Beispiel einen Bolzen oder eine Kugel, zum Eingriff mit der Formschlusskontur aufweist. Zwischen dem Betätigungskörper und dem Formschlusskörper können selbstverständlich auch Übertragungskörper oder Übertragungselemente vorgesehen sein, zum Beispiel eine weitere, mittlere Kugel, was im Ausführungsbeispiel gemäß der Zeichnung dargestellt ist.

Ferner sind auch zwei oder mehr Formschlusskonturen möglich. Jeder Formschlusskontur ist zweckmäßigerweise mindestens ein durch die Betätigungsfläche betätigbares Formschlusselement zugeordnet.

Das mindestens eine Formschlusselement umfasst vorzugsweise einen Wälzkörper, beispielsweise eine Walze und/oder eine Rolle und/oder eine Kugel. Es versteht sich, dass das Formschlusselement oder die Formschlusselemente auch stiftförmig, riegelförmig oder dergleichen ausgestaltet sein können.

Weiterhin liegt es im Rahmen der Erfindung, dass der Stellkörper mehrere gleichzeitig mit der Betätigungsfläche in Kontakt stehende Betätigungselemente oder Formschlusselemente, zum Beispiel zwei oder drei Kugeln, der Formschlusselementanordnung gleichzeitig betätigt, so dass beispielsweise in einem Drehwinkelabstand von 60° jeweils ein Formschlusselement oder ein Betätigungselement für ein Formschlusselement vom Stellkörper betätigt wird.

Das mindestens eine Formschlusselement der Formschlusselementanordnung ist zweckmäßigerweise in einem Führungskanal verstellbar bzw. beweglich gelagert.

Die Verriegelungsstellrichtung verläuft z.B. linear oder bogenförmig.

Die Kompensationsstellrichtung oder Kompensationsstellbahn ist z.B. eine zu der Verriegelungsstellrichtung linear schräg verlaufende Richtung oder Bahn. Die Kompensationsstellrichtung oder Kompensationsstellbahn kann auch einen bogenförmigen oder kreisförmigen Verlauf haben. Die Kompensationsstellrichtung oder Kompensationsstellbahn, kann in einer Rotationsrichtung um eine in der Verriegelungsstellrichtung verlaufenden Stellachse verlaufen.

Eine bevorzugte Ausführungsform sieht vor, dass das Stellmittel eine überlagerte rotatorische und lineare Verstellung des Stellkörpers bewirkt.

Die lineare Verstellung kann beispielsweise in Richtung der Verriegelungsstellrichtung orientiert sein, während die rotatorische Verstellung quer dazu, also in Kompensationsstellrichtung oder entlang der Kompensationsstellbahn orientiert ist. Es ist aber auch möglich, dass die Verriegelungsstellrichtung entlang einer Bogenbahn verläuft, und die Kompensationsstellrichtung oder die Kompensationsstellbahn einen linearen Verlauf hat. Somit wird also der Stellkörper zum Verstellen der Formschlusselementanordnung in die Verriegelungsstellung gedreht und im Sinne der Erfindung zusätzlich in Kompensationsstellrichtung linear verstellt, beispielsweise entlang einer Drehachse, um die die Verriegelungsstellrichtung verläuft.

An dieser Stelle sei bemerkt, dass selbstverständlich die Kompensationsstellrichtung bzw. die Kompensationsstellbahn und die Verriegelungsstellrichtung beide linear verlaufen können oder beide auch einen Bogenverlauf haben können. Vorzugsweise ist bei den Stellmitteln eine Drehwinkel-Begrenzungseinrichtung zur Drehwinkelbegrenzung der rotatorischen Verstellung des Stellkörpers vorhanden, zum Beispiel auf einen Drehwinkel-Bereich von Kleiner 90°, also einem spitzen Winkel. Dadurch kann z.B. der Verschleiß der Betätigungsfläche auf einen bestimmten Winkelbereich begrenzt werden.

Die Verriegelungsstellrichtung verläuft zweckmäßigerweise entlang einer Lineärverstellachse, wobei der Stellkörper in der Führung linear beweglich gelagert ist, und dass das Stellmittel den Stellkörper rotatorisch zu einer Drehung um die Linearverstellachse betätigt.

Die Führung für den Stellkörper ist beispielsweise als eine Art Bohrung ausgestaltet. Die Führung umfasst vorteilhaft einen Führungskanal.

Die Stellmittel umfassen zweckmäßigerweise mindestens eine Stellkulisse. Die mindestens eine Stellkulisse kann beispielsweise an einem durch einen Antrieb, zum Beispiel einen Motor, einen Betätigungsantrieb oder dergleichen, betätigbaren Antriebsbereich des Stellkörpers vorgesehen sein.

Beispielsweise hat der Stellkörper einen Antriebsbereich abseits der Betätigungsfläche. An diesem Antriebsbereich ist dann die mindestens eine Stellkulisse angeordnet.

Es ist aber auch möglich, dass die mindestens eine Stellkulisse beispielsweise zwischen der Führung für den Stellkörper und dem Stellkörper selbst vorgesehen ist. So kann beispielsweise die mindestens eine Stellkulisse an einer Innenwand der Führung vorgesehen sein, während ein Kulissenfolger am Stellkörper vorgesehen ist.

Weiterhin ist es auch möglich, dass die mindestens eine Stellkulisse sozusagen direkt einen Bestandteil der Betätigungsfläche bildet und/oder direkt an der Betätigungsfläche angeordnet ist. Die mindestens eine Stellkulisse kann auch von der Betätigungsfläche gebildet sein. Der Kulissenfolger ist in diesem Fall beispielsweise ein an der Betätigungsfläche bzw. der Stellkulisse geführter Körper der Formschlusselementanordnung, beispielsweise ein auf ein Formschlusselement wirkender Betätigungskörper oder das Formschlusselement selbst.

Zweckmäßigerweise ist daher vorgesehen, dass der Kulissenfolger von der Formschlusselementanordnung gebildet oder bereitgestellt wird.

Die Stellkulisse ist vorzugsweise schraubenförmig. Dadurch wird eine überlagerte lineare und rotatorische Bewegung des Stellkörpers quasi erzwungen. Es ist aber auch möglich, dass die Stellkulisse eine oder mehrere, insbesondere dreieckförmige oder S-förmige Stellkulissen oder Stellkulissenabschnitte aufweist, an denen dann ein Kulissenfolger entlang bewegt wird.

Wenn der Stellkörper in die Verriegelungsstellung oder aus der Verriegelungsstellung betätigt wird, gleitet der Kulissenfolger an der Stellkulisse entlang und sorgt zusätzlich zur Verstellung in der Verriegelungsstellrichtung oder entgegen dazu zu einer überlagerten Verstellung des Stellkörpers in Richtung der Kompensationsstellrichtung oder der Kompensationsstellbahn. Somit wird also beispielsweise einer linearen Verstellung eine rotatorische Verstellung überlagert.

Das Stellmittel umfassen zweckmäßigerweise einen Antrieb zum Antreiben des Stellkörpers in der Kompensationsstellrichtung quer zu der Verriegelungsstellrichtung. Der Antrieb wird beispielsweise von einem Antriebsmotor bereitgestellt, insbesondere einem Elektromotor.

Es versteht sich, dass der Antrieb sozusagen auch eine Doppelfunktion haben kann, nämlich zum einen zum Betätigen des Stellkörpers in der Verriegelungsstellrichtung und/oder entgegen der Verriegelungsstellrichtung dienen kann und zusätzlich den Stellkörper in der Kompensationsstellrichtung oder in Richtung der Kompensationsstellbahn betätigt. Beispielsweise ist ein entsprechendes Umlenkgetriebe vorhanden.

Ferner kann vorgesehen sein, dass der Antrieb, der zur Verstellung des Stellkörpers in die Verriegelungsstellrichtung oder entgegen der Verriegelungsstellrichtung oder beidem vorgesehen ist, ein Spiel oder eine Bewegungsfreiheit des Stellkörpers in der Kompensationsstellrichtung und/oder entgegen der Kompensationsstellrichtung zulässt. Z.B. kann der in Bezug auf die Verriegelungsstellrichtung vorgesehene Verriegelungsantrieb oder Entriegelungsantrieb, zum Beispiel ein Linearantrieb, eine Drehentkopplung gegenüber dem Stellkörper aufweisen derart, dass sich der Stellkörper quer zur linearen Verstellung auch drehen kann, beispielsweise in die Kompensationsstellrichtung und/oder entgegen der Kompensationsstellrichtung. In Kompensationsstellrichtung wirkt dann das Stellmittel, zum Beispiel eine Stellkulisse, ein weiterer Antrieb oder dergleichen.

Der Antrieb kann auch eine oder mehrere Federn umfassen, beispielsweise eine Feder, die den Stellkörper in Richtung der Verriegelungsstellung der Formschlusselementanordnung belastet.

Bevorzugt ist vorgesehen, dass die Verriegelungsstelleinrichtung den Stellkörper bei einer Betätigung von der Verriegelungsstellung in die Entriegelungsstellung oder umgekehrt in der Kompensationsstellrichtung betätigt. Wenn der Stellkörper in die Entriegelungsstellung verstellt wird, beispielsweise von der Formschlusselementanordnung weg, wird er sozusagen entlastet. Dann ist der Kraftaufwand besonders gering, der zu einer Betätigung in der Kompensationsstellrichtung notwendig ist.

Ein bevorzugtes Ausführungsbeispiel der Erfindung, das in der Zeichnung dargestellt ist, sieht vor, dass der Kupplungsarm an dem Halter beweglich, zum Beispiel schwenkbar, linear beweglich oder beides, gelagert ist. Der Kupplungsarm ist beispielsweise zwischen einer zum Anhängen eines Anhängers vorgesehenen Arbeitsstellung, in der der Kupplungsarm nach hinten vor ein Heck des Kraftfahrzeugs vorsteht, und einer Ruhestellung verstellbar gelagert, in der der Kupplungsarm näher zum Heck des Kraftfahrzeugs hin verstellt ist, beispielsweise unter oder hinter einen hinteren Stoßfänger zurückgeschwenkt und/oder verschoben ist. Ein halterseitiges, mit dem Halter verbundenes Lagerelement und ein kupplungsarmseitiges, mit dem Kupplungsarm verbundenes Lagerelement sind dann beweglich aneinander gelagert. Es versteht sich, dass das halterseitige Lagerelement direkt vom Halter gebildet oder einstückig mit dem Halter sein kann. Sinngemäß kann auch das kupplungsarmseitige Lagerelement direkt vom Kupplungsarm gebildet sein oder einstückig mit dem Kupplungsarm sein. Die Verriegelungseinrichtung dient dazu, die beiden Lagerelemente relativ zueinander zu verriegeln, beispielsweise in der Arbeitsstellung und/oder in der Ruhestellung.

Die Erfindung kann selbstverständlich auch im Zusammenhang mit Steck-Anhängekupplungen verwendet werden oder sonstigen Anhängekupplungen, bei denen der Kupplungsarm lösbar am Halter befestigbar ist.

Eine bevorzugte Ausführungsform sieht vor, dass der Stellkörper und die Führung am Halter, zum Beispiel dem halterseitigen Lagerelement, und die mindestens eine Formschlusskontur am Kupplungsarm angeordnet sind. Selbstverständlich ist auch die umgekehrte Konfiguration möglich, d.h. dass am Kupplungsarm der Stellkörper und die Führung angeordnet sind, während am Halter die mindestens eine Formschlusskontur vorgesehen ist. Diese letztere Konfiguration bietet sich beispielsweise für sogenannte Steck-Anhängekupplungen an.

Die Verriegelungseinrichtung ist zweckmäßigerweise zum Verspannen der Formschlusselementanordnung mit der mindestens einen Formschlusskontur ausgestaltet derart, dass die Betätigungsfläche des Stellkörpers eine Spannkraft auf die Formschlusselementanordnung ausübt. Gerade dann erweist es sich als Vorteil, dass die Betätigungsfläche in der Kompensationsstellrichtung betätigt wird, weil nämlich durch das Verspannen ein größerer Verschleiß der Betätigungsfläche auftritt.

Die Betätigungsfläche ist beispielsweise eine konische Fläche. Sämtliche Bereiche eines Konus eignen sich nämlich gleich gut zur Betätigung der Formschlusselementanordnung.

Der Stellkörper umfasst zweckmäßigerweise einen Sperrbolzen oder wird durch einen Sperrbolzen gebildet. Es versteht sich, dass auch andere Stellkörper möglich sind, zum Beispiel Kugelelemente, Keile oder dergleichen andere eine Betätigungsfläche aufweisende Stellkörper.

Bevorzugt ist die Betätigungsfläche an einem Mantel eines Kegels oder Kegelstumpfes vorgesehen. Der Stellkörper umfasst also zweckmäßigerweise einen Kegel oder Kegelstumpf.

Die Betätigungsfläche ist zweckmäßigerweise an einem Rotationskörper vorgesehen, z.B. an dessen Außenmantelfläche. Die Betätigungsfläche ist z.B. an einem Mantel eines Rotationsparaboloids, eines Rotationshyperboloids, eines Rotationsellipsoids, eines Kegels oder dergleichen vorgesehen.

Der Stellkörper kann z.B. die Gestalt eines Hundeknochens oder dergleichen aufweisen. Die Betätigungsfläche ist z.B. an einer Innenflanke einer knorpelartigen Verdickung oder eines Kopfes des Hundeknochens vorgesehen.

Die Betätigungsfläche hat zweckmäßigerweise schräg zur Verriegelungsstellrichtung einen Schrägverlauf. Vorzugsweise ist der Schrägverlauf keilförmig.

Es ist - auch in Kombination mit dem Schrägverlauf in Verriegelungsstellrichtung - möglich, dass die Betätigungsfläche schräg zur Kompensationsstellrichtung einen Schrägverlauf aufweist.

Der jeweilige Schrägverlauf ist vorzugsweise entgegen der jeweiligen Stellrichtung ansteigend, d.h. die Schräge nimmt bei Verstellung des Stellkörpers in Verriegelungsstellrichtung bzw. Kompensationsstellrichtung zu oder steigt an.

Selbstverständlich sind beispielsweise auch exzentrische Betätigungsflächen möglich.

Nachfolgend werden Ausführungsbeispiele der Erfindung anhand der Zeichnung erläutert. Es zeigen:
- Figur 1: eine schematische Ansicht einer erfindungsgemäßen Anhängekupplung von oben,
- Figur 2: einen teilweisen Längsschnitt durch eine Verriegelungseinrichtung der Anhängekupplung gemäß Figur 1 mit einem Stellkörper,
- Figur 3: eine Schnittansicht durch die Verriegelungseinrichtung gemäß Figur 2 entlang einer Linie III-III,
- Figur 4: eine schematische Ansicht einer Drehwinkelbegrenzung Verriegelungseinrichtung gemäß Figuren 2 und 3, etwa entlang einer Blickrichtung X in Figur 2,
- Figur 5: ein Detail des Stellkörpers gemäß Figur 2 mit einem Verschleißbild, das durch eine 1. Ausführungsform der Erfindung verursacht ist, und
- Figur 6: ein Detail des Stellkörpers gemäß Figur 2 mit einem anderen Verschleißbild, das durch eine 2. Ausführungsform der Erfindung verursacht ist,
- Figur 7: ein Detail einer Variante des Stellkörpers gemäß Figur 2, bei dem eine schraubenförmige Stellkulisse vorgesehen ist oder bei dem sich ein schraubenförmiges Verschleißbild ergab,
- Figur 8: eine Anhängekupplung, bei der die Verriegelungseinrichtung gemäß Figur 7 realisiert sein kann.

Eine Anhängekupplung 1 ist an einem Querträger 2, der einen Bestandteil eines nicht näher dargestellten Kraftfahrzeuges bilden kann, aber auch einen Bestandteil der Anhängekupplung 1, angeordnet. Von dem Kraftfahrzeug ist eine Fahrtrichtung F eingezeichnet. An dem Querträger 2 ist eine Haltekonsole eines Halters 4 der Anhängekupplung 1 montiert, zum Beispiel angeschraubt, angeschweißt oder dergleichen anderweitig befestigt. Darauf kommt es nicht an. Der Halter 4 weist ein Lagerelement 40 auf, an dem ein weiteres Lagerelement 3 schwenkbar und/oder verschieblich gelagert ist, beispielsweise entlang einer mit ML bezeichneten Achse verschiebbar und/oder um diese Achse drehbar.

Das Lagerelement 40 weist beispielsweise einen Lagervorsprung auf, an dem das Lagerelement 3, beispielsweise ein Kugelstangenlagerkopf, drehbar gelagert ist. Der Lagervorsprung ist beispielsweise als eine Hohlwelle ausgestaltet, in der der nachfolgend beschriebene Stellkörper 7 beweglich aufgenommen ist.

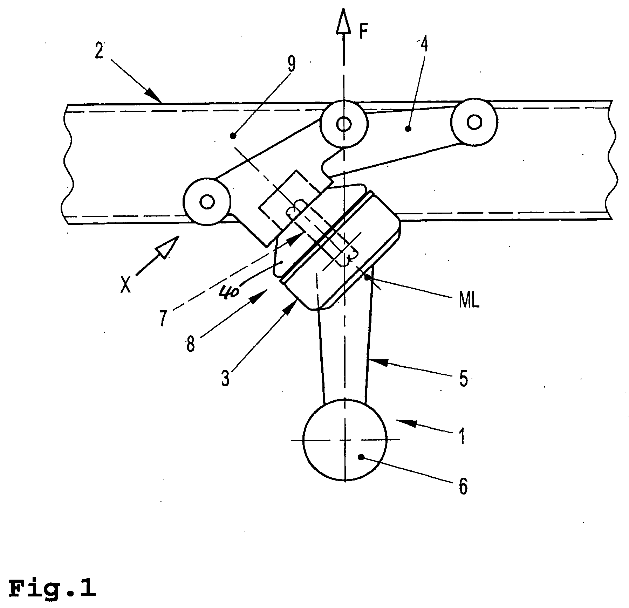

Das Lagerelement 3 trägt einen Kupplungsarm 5, an dessen freiem Ende eine Kupplungskugel 6, also ein Kuppelstück, angeordnet ist. An die Kupplungskugel 6 kann ein in der Zeichnung nicht dargestellter Anhänger angehängt werden. Die beiden Lagerelemente 40 und 3 sind durch eine Verriegelungseinrichtung 8 miteinander verriegelbar, beispielsweise in der in Figur 1 dargestellten, zum Anhängen eines Anhängers vorgesehenen Arbeitsstellung, vorzugsweise aber auch oder alternativ dazu in einer nicht dargestellten Ruhestellung, in der der Kupplungsarm 5 beispielsweise um die Achse ML zum Heck des Kraftfahrzeugs hin (z.B. in Fahrtrichtung F) geschwenkt ist, zum Beispiel unter einen Stoßfänger des Kraftfahrzeugs hinunter und/oder hinter den Stoßfänger.

Die Verriegelungseinrichtung 8 umfasst einen beispielsweise in der Art eines Sperrbolzens ausgestalteten Stellkörper 7. Der Stellkörper 7 ist in einer Führung 9 linear verschieblich bzw. axial verschieblich gelagert, nämlich entlang der bereits erwähnten Achse ML. Ein vorderer Abschnitt 10 des Stellkörpers 7 weist eine Betätigungsfläche 15 zum Betätigen von Körpern 14, 13 und 12 einer Formschlusselementanordnung 11 auf. Der Körper 14 bildet einen Betätigungskörper, der Körper 13 einen Übertragungskörper, während der Körper 12 ein Formschlusskörper ist, der in eine Formschlusskontur 42 im Sinne eines Verriegelns und formschlüssigen Festlegens eingreift. Vorliegend sind sämtliche drei Körper 12-14 als Kugeln ausgestaltet. Darauf kommt es jedoch nicht an. Es wäre beispielsweise möglich, dass der mittlere Körper 13 als ein Bolzenelement ausgestaltet ist, durch eine Feder gebildet ist oder dergleichen.

Die Körper 12, 13, 14 sind in einem Führungskanal 16 beweglich gelagert. Die Führung 9 und der Führungskanal 16 sind winkelig zueinander angeordnet, vorliegend beispielsweise rechtwinkelig, wobei selbstverständlich auch andere Winkel, zum Beispiel stumpfe oder spitze Winkel, ohne weiteres möglich sind. Der Führungskanal 16 verläuft radial bezüglich der ebenfalls als Kanal oder Bohrung ausgestalteten Führung 9. Der Führungskanal 16 ist beispielsweise als eine Bohrung ausgestaltet.

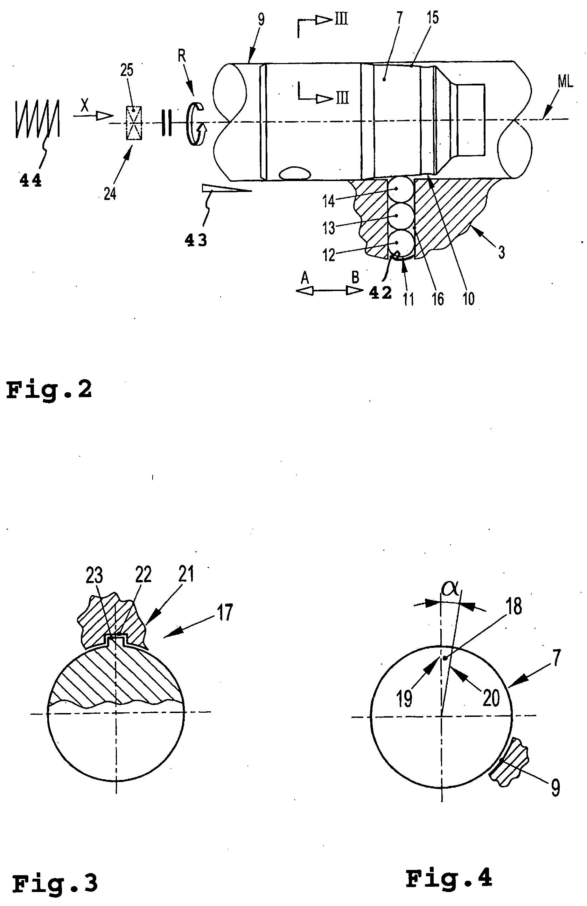

Wenn der Stellkörper 7 in einer Verriegelungsstellrichtung X, in Figur 2 also beispielsweise nach rechts, verstellt wird, das heißt also in Richtung zu der Formschlusselementanordnung 11 hin, wirkt die konische Betätigungsfläche 15 als eine Keilfläche, d.h. sie drückt die Formschlusselementanordnung 11 in Richtung der Verriegelungsstellung, in der der Körper 12, also das Formschlusselement, in die Formschlusskontur 42 eingreift.

Man kann sich nun vorstellen, dass durch eine ausschließlich axiale Verstellung des Stellkörpers 7 entlang der Verriegelungsstellrichtung X oder entgegen dazu, um die Verriegelungseinrichtung 8 zu entriegeln, lineare Verschleißbahnen in die Betätigungsfläche 15 eingefahren werden. Hier schafft die Erfindung Abhilfe:
Die Verriegelungseinrichtung 8 weist ein Stellmittel 17 zur Erzeugung einer Bewegung des Stellkörpers 7 in einer Kompensationsstellrichtung R quer zu der Verriegelungsstellrichtung X. Die Kompensationsstellrichtung R verläuft beispielsweise entlang einer Kreisbahn um die Achse ML herum.

Die rotatorische Bewegung des Stellkörpers 7 kann auf einen Drehwinkel α begrenzt sein, beispielsweise auf einen Drehwinkel 18 (Figur 4), der zwischen Drehwinkelgrenzen 19 und 20 vorgesehen ist. Die Drehwinkelgrenzen 19 und 20 begrenzen den Drehwinkel α.

Das Stellmittel 17 umfasst eine Stellkulisse 21, die dafür sorgt, dass der Stellkörper 7 bei einer linearen Verstellung in der Verriegelungsstellrichtung X oder entgegen dazu eine überlagerte rotatorische Bewegung in der Kompensationsstellrichtung R bzw. dazu entgegen durchläuft. Beispielsweise umfasst das Stellmittel 17 eine Stellkulisse 21 an einem von dem Abschnitt 10 des Stellkörpers 7 entfernten Antriebsbereich, beispielsweise in Figur 2 links, wo ein Antriebsmotor 25 eines Antriebs 24 eingezeichnet ist. Am Stellkörper 7 ist ein Kulissenfolger 23 angeordnet, der in eine Kulissennut 22 der Stellkulisse 21 eingreift.

Die Kulissennut 22 ist beispielsweise am Innenumfang der Führung 9 vorgesehen. Beispielsweise ist der Kulissenfolger 23 als ein Vorsprung am radialen Außenumfang des Stellkörpers 7 ausgestaltet.

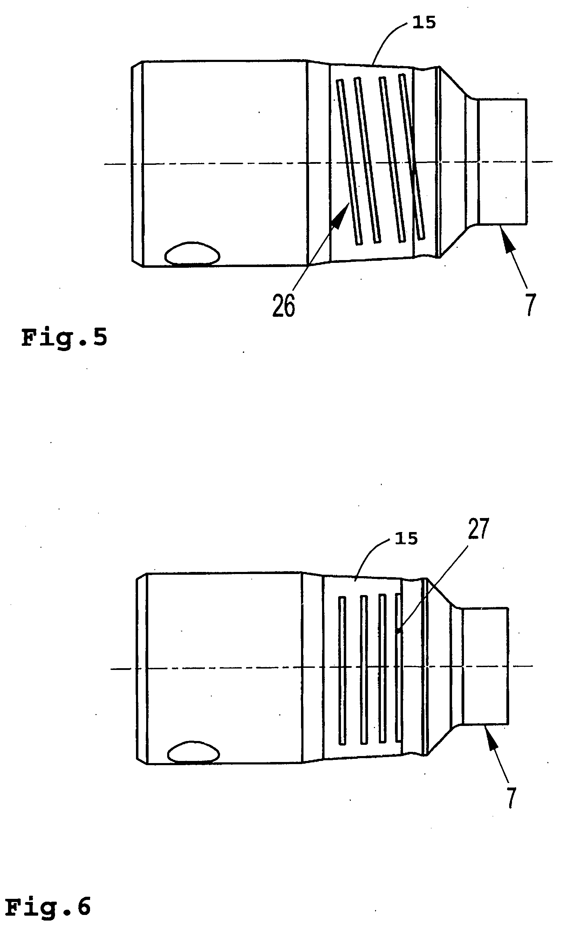

Die Betätigungsfläche 15 wird also bei der Axialbewegung zusätzlich gedreht, so dass sich die in Figur 5 dargestellte Lauf spur 26 im Bereich der konischen Betätigungsfläche 15 ergibt.

Diese Laufspur 26 erstreckt sich beispielsweise in der Art einer Schraubenlinie um den Außenumfang des Abschnitts 10 des Stellkörpers 7 herum.

Eine andere Variante der Erfindung kann auch vorsehen, dass beispielsweise entlang der schraubenlinienartigen Laufspur 26 eine Stellkulisse an der Betätigungsfläche 15 vorgesehen ist oder die Laufspur 26 eine Stellkulisse bildet, in der dann die Formschlusselementanordnung 11 entlang läuft. Eine solche Stellkulisse kann beispielsweise bereits bei der Fertigung des Stellkörpers 7 hergestellt werden. Somit bildet dann beispielsweise der Körper 14 einen Kulissenfolger, der in der entlang der Lauf spur 26 verlaufenden Stellkulisse läuft und somit eine Zwangs-Verdrehung des Stellkörpers 7 bei axialer Verstellung bzw. Verstellung in Verriegelungsstellrichtung X oder entgegen dazu bewirkt.

In der Figur 5 ist die Laufspur 26 durch parallele Schrägen dargestellt. Dies stellt eine Realisierungsform dar.

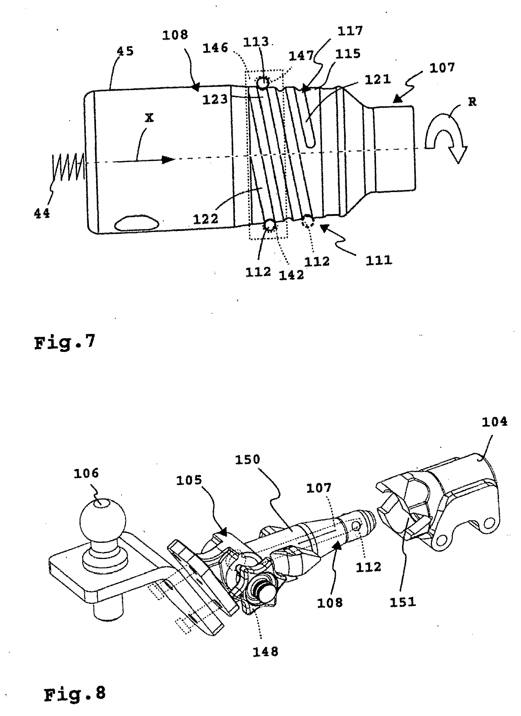

Die Laufspur 26, insbesondere dann, wenn sie eine Stellkulisse darstellt, kann auch einen schraubenförmigen oder spiraligen Verlauf haben, was in Figur 7 dargestellt ist.

Die in Figur 7 dargestellte Verriegelungseinrichtung 108 ist beispielsweise bei einem Steck-Kupplungssystem gemäß Figur 8 realisiert, bei dem ein Steckende 150 eines Kupplungsarms 105 in einen eine Steckaufnahme 151 aufweisenden Halter 104 einsteckbar ist und dort mittels der Verriegelungseinrichtung 108 verriegelbar ist. Am Kupplungsarm 105 ist beispielsweise eine Kupplungskugel 106 oder ein sonstiges Kupplungselement angeordnet.

Beispielsweise ist der Stellkörper 107 im Ausführungsbeispiel gemäß Figur 7 zur Betätigung von einem, 2 oder 3 Körpern 112, 113 zum Beispiel Kugeln, einer Formschlusselementanordnung 111 vorgesehen, die in mindestens eine zugeordnete Formschlusskontur 142 (schematisch angedeutet) zu verdrängen sind. Die Formschlusskontur 142 ist beispielsweise als eine Ringnut 147 an einem Ring 146 vorgesehen. Es ist aber auch möglich, dass mehrere, zum Beispiel kugelkalottenförmige Formschlusskonturen 142 vorgesehen sind. Die Ringnut 147 oder die Kugelkalotten sind z.B. in der Steckaufnahme 151 vorgesehen.

Die Körper 112, 113 laufen entlang mindestens einer schraubenförmig verlaufenden Kulissennut 122, 123, wenn der Stellkörper 107 in Richtung der Verriegelungsstellrichtung X betätigt wird. Der Stellkörper 107 ist durch eine Feder 44 in Verriegelungsrichtung belastet und kann beispielsweise durch ein Handrad 148 in Richtung einer Lösestellung betätigt werden. Das Handrad 148 wirkt beispielsweise auf eine Zahnstange, die mit dem Stellkörper 107 verbunden ist. Ein motorischer Antrieb ist allerdings auch möglich.

Die Kulissennuten 122, 123 können sich bei einer Drehung des Stellkörpers 107, die beispielsweise von der Antriebsseite her erfolgt (eine in Verriegelungsstellrichtung X wirkende Feder 44 ist schematisch eingezeichnet), sozusagen automatisch ergeben. Z.B. kann die oben erwähnte Zahnstange oder eine damit verbundene Stange beispielsweise eine schraubenförmige Kulisse aufweisen, die bei einer axialen Verstellung des Stellkörpers 107 entlang der Achse X eine Drehbewegung des Stellkörpers 107 bewirkt.

Vorzugsweise ist jedoch vorgesehen, dass die Kulissennuten 122 und 123 Stellkulissen 121 und somit ein Stellmittel 117 bilden, das eine Betätigung des Stellkörpers 107 quer zur Verriegelungsstellrichtung X bewirkt. Die Körper 112, 113 sind sozusagen die Kulissenfolger.

Zweckmässigerweise ist jedem Körper 112, 113 eine Kulissennut 122 und 123 zugeordnet. Der schraubenförmige Verlauf der Kulissennuten 122, 123 bewirkt einen Drall bzw. eine Verdrehung in Kompensationsstellrichtung bzw. entlang einer Kompensationsstellbahn oder Kompensationsstellrichtung R, d.h. dass mit zunehmendem Verschleiß der Verriegelungseinrichtung 8 die Körper 112, 113 immer weiter in Richtung des Betätigungsendes 45 des Stellkörpers 107 entlang der Kulissennut 122 und 123 weiter wandern und somit einen Verschleiß kompensieren. Im noch unverschlissenen Zustand ist beispielsweise die Kugel oder der Körper 112 noch in einer weiter vorn liegenden Position, was in Figur 7 in gestrichelten Linien eingezeichnet ist.

Eine Kulisse ist zwar zweckmäßig, jedoch nicht notwendig, wenn beispielsweise der Antrieb 24 vorgesehen ist. Der Antrieb 24 kann vorzugsweise getaktet arbeiten, das heißt dass er beispielsweise periodisch (alle 3 min, 5 min oder dergleichen) den Stellkörper 7 in der Kompensationsstellrichtung R verstellt. Beispielsweise verstellt der ein Stellmittel im Sinne der Erfindung bildende Antrieb 24 den Stellkörper 7 jeweils um einen vorbestimmten Drehwinkel, zum Beispiel 5° oder dergleichen.

Dadurch ergeben sich beispielsweise Laufspuren 27 bei zunehmendem Verschleiß des Stellkörpers 7 bzw. der Betätigungsfläche 15. Die näher beim freien Ende des Stellkörpers 7 befindliche Laufspur 27, auf die das Bezugszeichen aktuell zeigt, entsteht beispielsweise bei einem neuen, noch völlig unverschlissenen Stellkörper 7, während die davon weiter entfernteren Lauf spuren 27 bei zunehmendem Verschleiß auftreten.

Weiterhin ist es vorteilhaft, wenn der Stellkörper 7 beispielsweise nur bei einer Verstellung entgegen der Verriegelungsstellrichtung X in die Kompensationsstellrichtung R verstellt wird. Beispielsweise können in der Zeichnung schematisch angedeutete Keilschrägen 43 oder dergleichen andere Schrägkulissen oder Kurvenkulissen vorgesehen sein, an denen der Stellkörper 7 bei einer Verstellung in Richtung der Entriegelungsstellung entlang gleitet und dabei einen Drall oder eine Verdrehung erfährt.

Der Stellkörper 7 ist beispielsweise durch eine in der Zeichnung schematisch dargestellte Feder 44 in Richtung der Verriegelungsstellung (Pfeilrichtung X) federbeaufschlagt. Es versteht sich, dass dort auch ein Stellantrieb zur Verstellung des Stellkörpers 7 in die Verriegelungsstellung und/oder aus der Verriegelungsstellung heraus, also in die Entriegelungsstellung, vorgesehen sein kann.

## Patentansprüche

1. Anhängekupplung, mit einem an einem Kraftfahrzeug, insbesondere einem Personen-Kraftfahrzeug, befestigbaren oder befestigten Halter (4) zum Halten eines zum Anhängen eines Anhängers vorgesehenen Kupplungsarms (5), und mit einer Verriegelungseinrichtung (8) zur Verriegelung des Kupplungsarms (5) an dem Halter (4), wobei die Verriegelungseinrichtung (8) eine Formschlusselementanordnung (11; 111) mit mindestens einem Formschlusselement (12; 112, 113) umfasst, die in einer Verriegelungsstellung zur Verriegelung des Kupplungsarms (5) am Halter (4) mit einer Formschlusskontur (42; 142) in einem Formschlusseingriff ist und einer Entriegelungsstellung außer Eingriff ist, so dass der Kupplungsarm (5) relativ zu dem Halter (4) beweglich ist, wobei die Verriegelungseinrichtung (8) einen in einer Führung (9) beweglich gelagerten Stellkörper (7; 107) zum Verstellen der Formschlusselementanordnung (11; 111) aufweist, der eine Betätigungsfläche (15) aufweist, welche die Formschlusselementanordnung (11; 111) bei einer Verstellung des Stellkörpers (7; 107) in einer Verriegelungsstellrichtung (X) in die Verriegelungsstellung betätigt, **dadurch gekennzeichnet, dass** sie zur Kompensation eines Verschleißes der Betätigungsfläche (15) eine Verschleißkompensationseinrichtung aufweist, die ein Stellmittel (17; 117) zum Verstellen des Stellkörpers (7; 107) in einer Kompensationsstellrichtung (R) quer zu der Verriegelungsstellrichtung (X) umfasst, so dass anstelle eines verschlissenen Bereiches der Betätigungsfläche (15) ein durch die Verstellung in die Kompensationsstellrichtung erreichbarer unverschlissener Bereich der Betätigungsfläche (15) auf die Formschlusselementanordnung (11; 111) wirkt.

2. Anhängekupplung nach Anspruch 1, **dadurch gekennzeichnet, dass** das Stellmittel (17; 117) eine rotatorische Verstellung des Stellkörpers (7; 107) bewirkt, die insbesondere einer linearen oder rotatorische Verstellung des Stellkörpers (7; 107) überlagert ist.

3. Anhängekupplung nach Anspruch 1 oder 2, **dadurch gekennzeichnet, dass** die Verriegelungsstellrichtung (X) entlang einer Linearverstellachse verläuft, wobei der Stellkörper (7; 107) in der Führung (9) linear beweglich gelagert ist, und dass das Stellmittel (17; 117) den Stellkörper (7; 107) zur Verstellung in der Kompensationsstellrichtung (R) rotatorisch zu einer Drehung um die Linearverstellachse betätigt.

4. Anhängekupplung nach Anspruch 2 oder 3, **dadurch gekennzeichnet, dass** das Stellmittel (17; 117) eine Drehwinkel-Begrenzungseinrichtung zur Drehwinkelbegrenzung der rotatorischen Verstellung des Stellkörpers (7; 107), insbesondere einem Drehwinkel-Bereich von kleiner 90 Grad, umfasst.

5. Anhängekupplung nach einem der vorhergehenden Ansprüche, **dadurch gekennzeichnet, dass** das Stellmittel (17; 117) mindestens eine insbesondere schraubenförmige Stellkulisse (21) umfasst.

6. Anhängekupplung nach Anspruch 5, **dadurch gekennzeichnet, dass** die mindestens eine Stellkulisse (21) ganz oder abschnittsweise schraubenförmig ist und/oder mindestens einen zu der Verriegelungsstellrichtung (X) quer oder schräg verlaufenden Kulissenabschnitt aufweist.

7. Anhängekupplung nach Anspruch 5 oder 6, **dadurch gekennzeichnet, dass** die mindestens eine Stellkulisse (21) an einem durch einen Antrieb (24) betätigbaren Antriebsbereich des Stellkörpers (7; 107) oder an der Betätigungsfläche (15; 115), insbesondere zur Betätigung der Formschlusselementanordnung (11; 111), oder zwischen dem Stellkörper (7; 107) und der Führung (9) vorgesehen ist.

8. Anhängekupplung nach Anspruch 5, 6 oder 7, **dadurch gekennzeichnet, dass** die mindestens eine Stellkulisse (121) an der Betätigungsfläche (15; 115) angeordnet ist oder von dieser gebildet ist und mindestens ein Körper (112, 113) der Formschlusselementanordnung (11; 111) als ein Kulissenfolger in der mindestens einen Stellkulisse geführt ist.

9. Anhängekupplung nach einem der vorhergehenden Ansprüche, **dadurch gekennzeichnet, dass** das Stellmittel (17; 117) einen insbesondere einen Antriebsmotor (25) aufweisenden Antrieb (24) zum Antreiben des Stellkörpers (7; 107) in der Kompensationsstellrichtung (R) quer zu der Verriegelungsstellrichtung (X) aufweist.

10. Anhängekupplung nach einem der vorhergehenden Ansprüche, **dadurch gekennzeichnet, dass** Antrieb (24) von einem Antrieb gebildet wird, der zur Verstellung des Stellkörpers (7; 107) in die Verriegelungsstellrichtung (X) und/oder entgegen der Verriegelungsstellrichtung (X) dient, wobei der Antrieb (24) ein Umlenkgetriebe zum Umlenken der auf die Verriegelungsstellrichtung (X) bezogenen Bewegung in die Kompensationsstellrichtung (R) aufweist, oder dass ein zur Verstellung des Stellkörpers (7; 107) in die Verriegelungsstellrichtung (X) und/oder entgegen der Verriegelungsstellrichtung (X) dienender Antrieb eine Bewegung des Stellkörpers (7; 107) in die Kompensationsstellrichtung (R) oder entgegen dazu zulässt.

11. Anhängekupplung nach einem der vorhergehenden Ansprüche, **dadurch gekennzeichnet, dass** die Verriegelungsstelleinrichtung den Stellkörper (7; 107) bei einer Betätigung von der Verriegelungsstellung in die Entriegelungsstellung und/oder bei einer Betätigung von der Entriegelungsstellung in die Verriegelungsstellung in der Kompensationsstellrichtung (R) quer zu der Verriegelungsstellrichtung (X) betätigt.

12. Anhängekupplung nach einem der vorhergehenden Ansprüche, **dadurch gekennzeichnet, dass** der Kupplungsarm (5) an dem Halter (4) beweglich, insbesondere schwenkbar, gelagert ist, wobei ein halterseitiges, mit dem Halter (4) verbundenes Lagerelement (40) und ein kupplungsarmseitiges, mit dem Kupplungsarm (5) verbundenes, insbesondere als Kugelstangenlagerkopf ausgestaltetes, Lagerelement (3) beweglich aneinander gelagert sind und durch die Verriegelungseinrichtung (8) relativ zueinander verriegelbar sind, oder dass der Kupplungsarm (5) lösbar an dem Halter (4) befestigbar, insbesondere an den Halter (4) ansteckbar ist.

13. Anhängekupplung nach einem der vorhergehenden Ansprüche, **dadurch gekennzeichnet, dass** der Stellkörper (7; 107) und die Führung (9) an dem Halter (4), insbesondere dem halterseitigen Lagerelement (3, 40), und die mindestens eine Formschlusskontur (42; 142) am Kupplungsarm (5) oder umgekehrt die mindestens eine Formschlusskontur (42; 142) amHalter (4) und der Stellkörper (7; 107) und die Führung (9) an dem Kupplungsarm (5) vorgesehen sind.

14. Anhängekupplung nach einem der vorhergehenden Ansprüche, **dadurch gekennzeichnet, dass** die Verriegelungseinrichtung (8) zum Verspannen der Formschlusselementanordnung (11; 111) mit der mindestens einen Formschlusskontur (42; 142) ausgestaltet ist derart, dass die Betätigungsfläche (15; 115) des Stellkörpers (7; 107) eine Spannkraft auf die Formschlusselementanordnung (11; 111) ausübt.

15. Anhängekupplung nach einem der vorhergehenden Ansprüche, **dadurch gekennzeichnet, dass** der Stellkörper (7; 107) einen Sperrbolzen umfasst und/oder das mindestens eine Formschlusselement (12; 112, 113) eine Kugel umfasst und/oder dass die Betätigungsfläche (15; 115) eine Konusmantelfläche ist und/oder der Halter (4) ein Schwenklager und/oder Schiebelager zum schwenkbewegliche und/oder schiebebeweglichen Lagern des Kupplungsarms (5) oder eine Steckaufnahme zum Anstecken oder Einstecken des Kupplungsarms (5) umfasst.

## Claims

1. Trailer coupling, comprising a holder (4) which can be or is secured to a motor vehicle, in particular a passenger car, for holding a coupling arm (5) provided for attaching a trailer, and further comprising a locking device (8) for locking the coupling arm (5) on the holder (4), wherein the locking device (8) comprises an interlocking element arrangement (11; 111) with at least one interlocking element (12; 112, 113), which is in an interlocking engagement with an interlocking contour (42; 142) in a locking position for locking the coupling arm (5) on the holder (4) and out of engagement in an unlocking position, so that the coupling arm (5) is movable relative to the holder, wherein the locking device (8) comprises an adjusting body (7; 107), which is movably mounted in a guide (9) for adjusting the interlocking element arrangement (11; 111) and which has an actuating surface (15) which actuates the interlocking element arrangement (11; 111) when the adjusting body (7; 107) is moved in a locking adjustment direction (X) into the locking position, **characterised in that**, to compensate for a wear of the actuating surface (15), it comprises a wear compensation device including an adjusting means (17; 117) for adjusting the adjusting body (7; 107) in a compensation adjustment direction (R) perpendicular to the locking adjustment direction (X), so that, instead of a worn region of the actuating surface (15), a non-worn region of the actuating surface (15) which can be reached by the adjustment in the compensation adjustment direction acts on the interlocking element arrangement (11; 111).

2. Trailer coupling according to claim 1, **characterised in that** the adjusting means (17; 117) effects a rotational adjustment of the adjusting body (7; 107), which is in particular superimposed on a linear or rotational adjustment of the adjusting body (7; 107).

3. Trailer coupling according to claim 1or 2, **characterised in that** the locking adjustment direction (X) extends along a linear adjustment axis, the adjusting body (7; 107) being mounted in the guide (9) for linear movement, and **in that** the adjusting means (17; 117) actuates the adjusting body (7; 107) rotationally to rotate about the linear adjustment axis for an adjustment in the compensation adjustment direction (R).

4. Trailer coupling according to claim 2 or 3, **characterised in that** the adjusting means (17; 117) comprises a rotation angle limiting device for limiting the rotation angle of the rotational adjustment of the adjusting body (7; 107), in particular to a rotation angle range of less than 90 degrees.

5. Trailer coupling according to any of the preceding claims, **characterised in that** the adjusting means (17; 117) comprises at least one in particular helical adjusting gate (21).

6. Trailer coupling according to claim 5, **characterised in that** the at least one adjusting gate (21) is helical as a whole or in sections and/or has at least one gate section which extends perpendicular or at an angle to the locking adjustment direction (X).

7. Trailer coupling according to claim 5 or 6, **characterised in that** the at least one adjusting gate (21) is provided in a drive region of the adjusting body (7; 107), which can be actuated by a drive (24), or on the actuating surface (15; 115), in particular for actuating the interlocking element arrangement (11; 111), or between the adjusting body (7; 107) and the guide (9).

8. Trailer coupling according to claim 5, 6 or 7, **characterised in that** the at least one adjusting gate (121) is located on the actuating surface (15; 115) or represented thereby, and **in that** at least one body (112, 113) of the interlocking element arrangement (11; 111) is guided as a gate follower in the at least one adjusting gate.

9. Trailer coupling according to any of the preceding claims, **characterised in that** the adjusting means (17; 117) comprises a drive (24) designed as a drive motor (25) in particular for driving the adjusting body (7; 107) in the compensation adjustment direction (R) at right angles to the locking adjustment direction (X).

10. Trailer coupling according to any of the preceding claims, **characterised in that** the drive (24) is represented by a drive used for adjusting the adjusting body (7; 107) in the locking adjustment direction (X) and/or against the locking adjustment direction (X), wherein the drive (24) comprises a deflection gear for deflecting the movement relating to the locking adjustment direction (X) in the compensation adjustment direction (R), or **in that** a drive serving to adjust the adjusting body (7; 107) in the locking adjustment direction (X) and/or against the locking adjustment direction (X) allows a movement of the adjusting body (7; 107) in or against the compensation adjustment direction (R).

11. Trailer coupling according to any of the preceding claims, **characterised in that** the locking adjustment device actuates the adjusting body (7; 107) in the compensation adjustment direction (R) perpendicular to the locking adjustment direction (X) when operated from the locking position into the unlocking position and/or when operated from the unlocking position into the locking position.

12. Trailer coupling according to any of the preceding claims, **characterised in that** the coupling arm (5) is movably, in particular pivotably, mounted on the holder (4), wherein a holder-side bearing element (40) connected to the holder (4) and a coupling arm-side bearing element (3) connected to the coupling arm (5) and in particular designed as a ball rod bearing head are movably mounted on one another and locked relative to one another by the locking device (8), or **in that** the coupling arm (5) can be releasably secured to, in particular plugged onto, the holder (4).

13. Trailer coupling according to any of the preceding claims, **characterised in that** the adjusting body (7; 107) and the guide (9) are provided on the holder (4), in particular on the holder-side bearing element (3, 40), and the at least one interlocking contour (42; 142) is provided on the coupling arm (5), or that in a reverse arrangement the at least one interlocking contour (42; 142) is provided on the holder (4) and the adjusting body (7; 107) and the guide (9) are provided on the coupling arm (5).

14. Trailer coupling according to any of the preceding claims, **characterised in that** the locking device (8) is designed for clamping the interlocking element arrangement (11; 111) to the at least one interlocking contour (42; 142) in such a way that the actuating surface (15; 115) of the adjusting body (7; 107) applies a clamping force to the interlocking element arrangement (11; 111).

15. Trailer coupling according to any of the preceding claims, **characterised in that** the adjusting body (7; 107) comprises a locking pin, and/or **in that** the at least one interlocking element (12; 112, 113) comprises a ball, and/or **in that** the actuating surface (15; 115) is cone surface, and/or **in that** the holder (4) comprises a pivot bearing and/or a sliding bearing for the pivotable or slidable mounting of the coupling arm (5) or a plug receptacle for plugging the coupling arm on or in.

## Revendications

1. Attelage, comprenant un support (4) fixé ou pouvant être fixé sur un véhicule automobile, en particulier une voiture, et servant à porter un bras d'attelage (5) destiné à atteler une remorque, et comprenant un dispositif de verrouillage (8) servant à verrouiller le bras d'attelage (5) sur le support (4), le dispositif de verrouillage (8) comprenant un ensemble d'éléments de liaison par complémentarité de formes (11 ; 111) présentant au moins un élément de liaison par complémentarité de formes (12 ; 112, 113), lequel ensemble, dans une position de verrouillage servant à verrouiller le bras d'attelage (5) sur le support (4), est en contact par complémentarité de formes avec un contour de complémentarité de formes (42 ; 142), et lequel n'est pas en contact avec ce dernier dans une position de déverrouillage, de sorte que le bras d'attelage (5) est mobile par rapport au support (4), le dispositif de verrouillage (8) comprenant un corps de commande (7 ; 107) qui est monté mobile dans un élément de guidage (9) et qui sert à déplacer l'ensemble d'éléments de liaison par complémentarité de formes (11 ; 111), ledit corps comprenant une surface d'actionnement (15), laquelle actionne l'ensemble d'éléments de liaison par complémentarité de formes (11 ; 111) lors d'un déplacement du corps de commande (7 ; 107) dans une position de commande de verrouillage (X) dans la position de verrouillage, **caractérisé en ce que**, pour compenser une usure de la surface d'actionnement (15), ledit attelage comprend un dispositif de compensation d'usure qui comporte un moyen de commande (17 ; 117) servant à déplacer le corps de commande (7 ; 107) dans une direction de commande de compensation (R) transversalement à la direction de commande de verrouillage (X), de sorte qu'au lieu d'une zone usée de la surface d'actionnement (15), une zone non usée de la surface d'actionnement (15) pouvant être atteinte par le déplacement dans la direction de commande de compensation agit sur l'ensemble d'éléments de liaison par complémentarité de formes (11 ; 111).

2. Attelage selon la revendication 1, **caractérisé en ce que** le moyen de commande (17 ; 117) provoque un déplacement en rotation du corps de commande (7 ; 107), lequel déplacement est superposé en particulier à un déplacement linéaire ou rotatif du corps de commande (7 ; 107).

3. Attelage selon la revendication 1 ou 2, **caractérisé en ce que** la direction de commande de verrouillage (X) s'étend le long d'un axe de déplacement linéaire, le corps de commande (7 ; 107) étant monté de manière à pouvoir se déplacer linéairement dans l'élément de guidage (9), et **en ce que** le moyen de commande (17 ; 117) actionne le corps de commande (7 ; 107) pour qu'il se déplace en rotation dans la direction de commande de compensation (R) et tourne autour de l'axe de déplacement linéaire.

4. Attelage selon la revendication 2 ou 3, **caractérisé en ce que** le moyen de commande (17 ; 117) comprend un dispositif de limitation d'angle de rotation permettant de limiter l'angle de rotation du déplacement en rotation du corps de commande (7 ; 107), en particulier une plage d'angles de rotation inférieure à 90 degrés.

5. Attelage selon l'une quelconque des revendications précédentes, **caractérisé en ce que** le moyen de commande (17 ; 117) comprend au moins une coulisse de commande (21) en particulier hélicoïdale.

6. Attelage selon la revendication 5, **caractérisé en ce que** la ou les coulisses de commande (21) sont hélicoïdales dans leur intégralité ou sur certaines parties et/ou comprennent au moins une partie s'étendant transversalement ou en biais par rapport à la direction de commande de verrouillage (X).

7. Attelage selon la revendication 5 ou 6, **caractérisé en ce que** la ou les coulisses de commande (21) sont situées sur une zone d'entraînement du corps de commande (7 ; 107) pouvant être actionnée par un entraînement (24) ou sur la surface d'actionnement (15 ; 115), en particulier pour l'actionnement de l'ensemble d'éléments de liaison par complémentarité de formes (11 ; 111), ou entre le corps de commande (7 ; 107) et l'élément de guidage (9).

8. Attelage selon la revendication 5, 6 ou 7, **caractérisé en ce que** la ou les coulisses de commande (121) sont disposées sur la surface d'actionnement (15 ; 115) ou sont formées par cette dernière et au moins un corps (112, 113) de l'ensemble d'éléments de liaison par complémentarité de formes (11 ; 111) est guidé en tant que suiveur de coulisse dans la ou les coulisses de commande.

9. Attelage selon l'une quelconque des revendications précédentes, **caractérisé en ce que** le moyen de commande (17 ; 117) comprend un entraînement (24) qui comporte en particulier un moteur d'entraînement (25) servant à entraîner le corps de commande (7 ; 107) dans la direction de commande de compensation (R) transversalement à la direction de commande de verrouillage (X).

10. Attelage selon l'une quelconque des revendications précédentes, **caractérisé en ce que** l'entraînement (24) est formé par un entraînement qui sert à déplacer le corps de commande (7 ; 107) dans la direction de commande de verrouillage (X) et/ou à l'encontre de la direction de commande de verrouillage (X), l'entraînement (24) comprenant un mécanisme de renvoi servant à renvoyer le déplacement rapporté à la direction de commande de verrouillage (X) dans la direction de commande de compensation (R), ou **en ce qu'**un entraînement servant à déplacer le corps de commande (7 ; 107) dans la direction de commande de verrouillage (X) et/ou à l'encontre de la direction de commande de verrouillage (X) autorise un déplacement du corps de commande (7 ; 107) dans la direction de commande de compensation (R) ou à l'encontre de cette dernière.

11. Attelage selon l'une quelconque des revendications précédentes, **caractérisé en ce que** le dispositif de commande de verrouillage actionne le corps de commande (7 ; 107) lors d'un actionnement de la position de verrouillage dans la position de déverrouillage et/ou lors d'un actionnement de la position de déverrouillage dans la position de verrouillage dans la direction de commande de compensation (R) transversalement à la direction de commande de verrouillage (X).

12. Attelage selon l'une quelconque des revendications précédentes, **caractérisé en ce que** le bras d'attelage (5) est monté mobile, en particulier pivotant sur le support (4), un élément d'appui (40) côté support, relié au support (4), et un élément d'appui (3) côté bras d'attelage, relié au bras d'attelage (5) et conçu en particulier comme une tête d'appui de barre d'accouplement, sont montés mobiles l'un sur l'autre et peuvent être verrouillés l'un par rapport à l'autre par le dispositif de verrouillage (8), ou **en ce que** le bras d'attelage (5) peut être fixé détachable sur le support (4), en particulier accroché sur le support (4).

13. Attelage selon l'une quelconque des revendications précédentes, **caractérisé en ce que** le corps de commande (7 ; 107) et l'élément de guidage (9) sont situés sur le support (4), en particulier sur l'élément d'appui (3, 40) côté support, et le ou les contours de complémentarité de forme (42 ; 142) sont situés sur le bras d'attelage (5), ou inversement le ou les contours de complémentarité de forme (42 ; 142) sont situés sur le support (4) et le corps de commande (7 ; 107) et l'élément de guidage (9) sont situés sur le bras d'attelage (5).

14. Attelage selon l'une quelconque des revendications précédentes, **caractérisé en ce que** le dispositif de verrouillage (8) est conçu pour serrer l'ensemble d'éléments de liaison par complémentarité de formes (11 ; 111) avec le ou les contours de complémentarité de forme (42 ; 142), de telle manière que la surface d'actionnement (15 ; 115) du corps de commande (7 ; 107) exerce une force de serrage sur l'ensemble d'éléments de liaison par complémentarité de formes (11 ; 111).

15. Attelage selon l'une quelconque des revendications précédentes, **caractérisé en ce que** le corps de commande (7 ; 107) comprend un boulon d'arrêt et/ou l'élément ou les éléments de liaison par complémentarité de forme (12 ; 112, 113) comprennent une sphère et/ou **en ce que** la surface d'actionnement (15 ; 115) est une surface conique et/ou le support (4) comprend un palier pivotant et/ou un palier coulissant servant à l'appui pivotant et/ou coulissant du bras d'attelage (5) ou un logement d'emboîtement servant à accrocher ou à insérer le bras d'attelage (5).
